Europäisches Patentamt

European Patent Office

Office européen des brevets

(19)

(11) Publication number: **0 255 502**
A2

(12) # EUROPEAN PATENT APPLICATION

(21) Application number: 87870105.1

(22) Date of filing: 28.07.87

(51) Int. Cl.³: **B 60 K 17/348**

(30) Priority: 29.07.86 BE 905188

(43) Date of publication of application:
03.02.88 Bulletin 88/5

(84) Designated Contracting States:
AT DE FR GB IT SE

(71) Applicant: Van Camp, Guido
Goorstraat 7
B-2230 Schilde(BE)

(72) Inventor: Van Camp, Guido
Goorstraat 7
B-2230 Schilde(BE)

(54) Diagonal transmission system.

(57) Power distribution system in a more-axle transmission, where the power is distributed to the wheels diagonally-wise. This is based on the fact that in most of the situations the diagonal sums of the covered distances are nearly equal. Therefor the diagonal transmissionlines – transmitting the power to diagonal opposite wheels – are coupled. By influencing the couple distribution front/rear in each diagonal, we can use this system to steer the powerdistribution left/right on one axle determinated by the distances covered by the diagonally opposite wheels.

EP 0 255 502 A2

Croydon Printing Company Ltd

This patent describes a new system for the powerdistribution in a more axles transmission.

In the actual systems of transmission over more axles either the power is transmitted to the different axles by a distribution-system (differential, epicycloid, viscosystem,...), or the different axles are stiff coupled and propulsed together. Each of these axles are mostly provided with a differential. These differentials are necessary because the distance covered by the front axle (*) isn't always identical to that off the rear axle and the distance covered by the left wheel of an axle is'nt identical to that covered by the right wheel.

In the most current systems, where the power is transmitted to the front and rear differential by a central differential, the transmission loses all it's efficiency once even a single driven wheel loses it's grip.

All the energy is lost in the spinning of that wheel, because the driving power takes the line of least resistance and the other wheels, having enough grip (to transmit power), are not driven. To avoid this each of the differentials (or other power distri-butionsystem) can be blocked, to neutralise more or less the differential working.

These blockingsystems can be from a device that reduces the maximum rotation differences between the two output driveshafts (from the most simply to the most sophisticated device, controlling the action after interpreting measuring results) to a stiff coupling of the output driveshafts, each of them being able then to accept the total driving couple .

(*) The meaning front- and rear axle has to be interpreted as front- and rear axle of any group of axles.

In a configuration as described above (central-, front-, and rear differential) very often the central differential is blocked to become a stiff coupling between front- and rear axle.

This brings the advantage that both front- and rear axle can receive the totality of the driving force, in such a way that once the grip on one axle is lost, all the driving power is transmitted to the other axle, trying to maintain all the traction.

On the other hand this blocked configuration detoriates the cars road-holding in a bend.

The differences in distances covered by the wheels, normally absorbed by the differential working, induce now effects in the transmission, that are worked out by the friction of the wheels: this destabilisates the cars road-holding capacity.

Also once a wheel loses his grip, all the driving couple is transmitted to the other axle.

This transfer of the couple destabilisates again the car.

The wheel that is wheeling free is not rotating at his exact speed, what will prevent this wheel of regaining his grip.

All the systems that control automaticly the blocking of a differential are based on the principle that after detection and evaluation of the imperfection in the transmission and when certain limits are reached the system will order to block    the differential and keep control of it, trying to limit the negative effects of the imperfection in this transmission.

Again such a system detoriates the cars road-holding capability, because it's only effectif after the imperfection in the transmission was detected.

Common point in all this systems is that the power is transmitted axle wise, and that the relation axle/axle or leftwheel/rightwheel on the same axle can be corrected.

of the covered distances

This patent concerns a new system in a more axles transmission that consists in not to distribute the power axle per axle but diagonal-wise. This is based on the fact that in a bend the diagonal sums are nearly always equal. (frontleft + rearright = frontright + rearleft).

In given circonstances (wheelbase, width, radius,...) these sums can become perfectly equal by taking the width at the front different as from the rear.

This difference can be a certain value, giving the equality for one certian radius. This gives a possibility to chance the over- and understeering abilitys of the car.

The difference could also be a variable to have a total equality (or a fixed -chosen-difference) in function of the radius.


ADVANTAGES:

The biggest advantage of the system of diagonal transmission is that it has no more the disadvantages of the classic axle/axle distribution.

These disavantages where explained above.

Using the diagonal transmissing system it is possible to have a stiff coupling between the diagonal wheelpairs without any negative influences on the cars' road-holding ability.

If in such a configuration one wheel loses his grip, all the driving force is transmitted to the other diagonal wheelpair: the traction of the car remains perfect, without any blockingsystem.

Besides the driving force is diagonaly distributed to one front and the opposit rearwheel, giving no negative influences in to the cars'road-holding capability, due to transfer of couple!

In such a situation the wheel losing grip has been rotating all the time at the exact speed to describe his way in a bend. For this reason the wheel can regain very fast his grip and will be able to transmit again power.

The diagonal transmissionsystem adapts itself instantaneous to the changes of grip conditition, without any detectionsupply and distinguishes itself by this from all other systems that will order or control a blocking system after detection of irregularitys in the transmission.

When bracking the diagonal transmission system will prevent also the wheels to block (instantaneous action - without any detection). As fast as one wheel shows tendancy to block this will be prevented: due to the stiff coupling of the diagonals it has to keep on turning at his exact speed.(f.i. in a clasic 4 wheeldrive a wheel can be blocked by bracking).

In the diagonal transmission system the differential working of the diagonals can be concepted in such a way that a certain part of the power is transmitted to the front wheel, and the rest of the power will go to the diagonal opposite wheel.

In the extreme case the diagonal transmission system can control instantaneous the power distribution rightwheel/leftwheel on one axle: if the totality of the power is transmitted to the (f.i.) rearaxle, this power will automaticly be distributed to left- and rightwheel in exactly the needed amount, determinated by the distances covered by the front wheels.

This results in a stiff but (instantaneous) controlled differential.

CLAIMS
**********

1. Configuration in a transmission where the distribution of
the power to the wheels of several axles takes place in a
diagonal-wise way, based on the fact that the diagonal sums
of the distances covered by the diagonal opposite wheels
are nearly always equal. Therefor the diagonal transmissionlines
(transmitting the power to the diagonal opposite wheels)
are coupled.

2. Configuration in a transmission where the distribution
left/right of the power to the wheels of one axle
takes place following the diagonal principle,
beiing controlled by the distances covered by the
diagonal opposite wheels.

3. All the combinations of point 1.

4. All the combinations of point 2.

5. All the combinations of point 3.

6. All the combinations of points 1, 2, and 3
combinated with any other system.